# EUROPÄISCHE PATENTANMELDUNG

(11) **EP 3 640 529 A1**
(43) Veröffentlichungstag der Anmeldung: **22.04.2020**
(21) Anmeldenummer: 19194289.5
(22) Anmeldetag: 29.08.2019
(51) Int. Cl.: F21S 8/02, F21S 41/33, F21S 43/40, F21V 5/00, F21V 7/04, F21V 13/04, G02B 3/08

(54) **LED-LEUCHTE UND LEUCHTENSYSTEM**

(30) Priorität: 16.10.2018 DE 102018217695
(71) Anmelder: H4X e.U., 8055 Graz (AT)
(72) Erfinder: HIERZER, Andreas, 8010 Graz (AT)
(74) Vertreter: Isarpatent

(57) **Zusammenfassung**

Eine Leuchte (1) umfasst ein LED-Modul (2) mit einer Vielzahl von LED-Leuchtmitteln (3); eine Silikonlinse (4), welche auf dem LED-Modul (2) angeordnet ist, wobei die Silikonlinse (4) mit einer facettierten Lichteintrittsfläche und mit einer facettierten Lichtaustrittsfläche zur Homogenisierung des von dem LED-Modul (2) ausgestrahlten Lichts ausgebildet ist; und einen facettierten Reflektor (6), der um die Silikonlinse (4) herum zur Reflexion des homogenisierten Lichts ausgebildet ist; wobei das LED-Modul (2) dazu ausgebildet ist, Licht mit variabler Farbe und/oder variabler Farbtemperatur abzustrahlen.

## Beschreibung

### TECHNISCHES GEBIET DER ERFINDUNG

Die Erfindung betrifft eine LED-Leuchte, insbesondere eine als Downlight oder Wallwasher implementierte wand- oder deckenmontierte LED-Leuchte, sowie ein Leuchtensystem mit mehreren solcher LED-Leuchten.

### TECHNISCHER HINTERGRUND

Moderne Decken- oder Wandleuchten weisen mitunter eine Vielzahl einzelner Lichtquellen und/oder Leuchtmodule auf, die beispielsweise linear in einer Reihe oder matrixartig angeordnet sein können, um möglichst vielfältige Beleuchtungsszenarien umsetzen zu können. Beispielsweise beschreibt die Druckschrift DE 10 2016 217 332 A1 eine Leuchte mit mehreren Leuchtsegmenten, die in einen Leuchtenbasiskörper einsetzbar sind und jeweils Licht in gerichteter Weise und mit unterschiedlichen Abstrahlcharakteristiken aussenden.

In speziellen Beleuchtungsanwendungen wie etwa in der Gebäudebeleuchtung oder der Veranstaltungstechnik können LED-Leisten oder LED-Arrays zum Einsatz kommen. Derartige LED-basierte Leuchten können mit Reflektoren und anderen optischen Elementen ausgestattet werden und beispielsweise als Downlight, d.h. als Deckenleuchte, oder als Wallwasher, d.h. als Wandbeleuchtung, ausgebildet sein. In einer konkreten Anwendung kann eine derartige Leuchte beispielsweise als Fluter zur punktuellen oder streifenförmigen linearen oder spotartigen Beleuchtung von ausgedehnten ebenen Flächen, wie etwa Wänden oder Fassaden, eingesetzt werden, wie es beispielsweise ebenfalls in der DE 10 2016 217 332 A1 erläutert wird.

Gleichzeitig ist es erstrebenswert, die Leuchtcharakteristik der Leuchtensysteme so variabel und flexibel wie möglich zu gestalten, z.B. indem variable Lichtfarben und/oder Farbtemperaturen durch Kombination unterschiedlich ausgebildeter LEDs ermöglicht werden. Eine besondere Herausforderung bei derartigen Beleuchtungskonzepten liegt mitunter darin, eine möglichst homogene und gerichtete Lichtausstrahlung ohne relevante Effizienzeinbußen zu erreichen, damit das Licht der Einzel-LEDs möglichst gut zu einer einheitlichen Lichtfarbe bzw. Farbtemperatur gemischt wird.

### ZUSAMMENFASSUNG DER ERFINDUNG

Eine der Aufgaben der Erfindung besteht darin, Lösungen für LED-basierte Leuchten mit abstimmbarer Lichtfarbe und/oder Farbtemperatur zu finden, die eine hochgradig homogene Lichtausstrahlung aufweisen.

Diese und andere Aufgaben werden durch eine Leuchte mit den Merkmalen des Anspruchs 1 und durch ein Leuchtensystem mit den Merkmalen des Anspruchs 11 gelöst.

Gemäß einem ersten Aspekt der Erfindung umfasst eine Leuchte, insbesondere ein Downlight oder ein Wallwasher, ein LED-Modul mit einer Vielzahl von LED-Leuchtmitteln; eine Silikonlinse, welche auf dem LED-Modul angeordnet ist, wobei die Silikonlinse mit einer facettierten Lichteintrittsfläche und mit einer facettierten Lichtaustrittsfläche zur Homogenisierung des von dem LED-Modul ausgestrahlten Lichts ausgebildet ist; und einen facettierten Reflektor, der um die Silikonlinse herum zur Reflexion des homogenisierten Lichts ausgebildet ist; wobei das LED-Modul dazu ausgebildet ist, Licht mit variabler Farbe und/oder variabler Farbtemperatur abzustrahlen.

Gemäß einem zweiten Aspekt der Erfindung umfasst ein Leuchtensystem eine Mehrzahl von erfindungsgemäßen Leuchten.

Eine der vorliegenden Erfindung zugrunde liegende Idee besteht darin, das von einem LED-Modul abgestrahlte Licht durch eine doppelt facettierte Silikonlinse zu leiten, d.h. durch eine Silikonlinse mit einer über dem LED-Modul liegenden facettierten Lichteintrittsseite und einer darüber liegenden facettierten Lichtaustrittsseite, und dadurch eine hochgradig homogene Lichtausstrahlung zu erreichen. Unter einer facettierten Oberfläche wird vorliegend verstanden, dass eine Vielzahl von (Mikro-)Facetten in eine Fläche eingearbeitet ist und/oder diese bedeckt. Das von den LED-Leuchtmitteln des LED-Moduls ausgesendete Licht unterschiedlicher Lichtfarbe, z.B. Rot, Grün und Blau (RGB), und/oder unterschiedlicher Farbtemperatur, z.B. kalt weiß und warm weiß, wird durch die doppelte Facettenreihe gewissermaßen durchgemischt, d.h. die doppelt facettierte Silikonlinse dient als Mischkammer, um eine gute Lichtmischung und damit möglichst einheitliche Lichtfarbe bzw. Farbtemperatur zu erreichen. Hierbei wird die Silikonlinse durch den ebenfalls facettierten Reflektor unterstützt, welcher Strahlen unterschiedlicher Farbe weiter verteilt und miteinander verschmilzt, um eine endgültige gleichmäßige Lichtverteilung zu erreichen. Die Farbtemperatur bzw. Lichtfarbe des von der Leuchte abgestrahlten Lichts kann hierbei durch Regelung der Leuchtstärken der einzelnen LED-Leuchtmittel festgelegt werden, z.B. kann über die Regelung des Anteils von warmweißem und kaltweißem Licht die finale Farbtemperatur eingestellt werden.

Beim Einsatz von mischbarem Licht in Strahlern oder anderen Leuchten liegt eine Schwierigkeit häufig darin, dass die zum Einsatz kommenden Reflektoren sichtbare Schatten und/oder Brechungen an Kanten der Lichtflächen erzeugen, wie sie am beleuchteten Objekt/der beleuchteten Fläche zu sehen sind (d.h. an den Übergangen zwischen beleuchteten und nicht beleuchteten Flächen). Diese sind für hochwertige Beleuchtungslösungen unerwünscht. Häufig werden zur Verbesserung dieser Problematik bei herkömmlichen Lösungen opake Linsen verwendet (bzw. generell opake Diffusoren, d.h. optische Elemente, die auch in anderer als Linsenform, z.B. als Abdeckung, vorliegen), die zwar einerseits durchaus dazu in der Lage sind, die Homogenisierung zu verbessern, andererseits aber hohe Effizienzeinbußen aufweisen (mindestens -15% des Wirkungsgrades). Mittels der hier vorgeschlagenen doppelt facettierten Linse wird eine Homogenisierung erreicht, d.h. eine Vormischung des Lichtes vor Auftritt auf den Reflektor und damit zugleich eine Vermeidung unerwünschter Brechungseffekte, ohne bzw. mit wesentlich geringeren Effizienzeinbußen.

Durch die Wahl von lichtdurchlässigem Silikon als Linsenmaterial kann die Einbauhöhe der Linse auf dem LED-Modul sehr gering gehalten werden, z.B. wenige Millimeter, sodass auch der Reflektor platzsparend direkt an diesen Komponenten angeordnet werden kann. Derartiges optisches Silikon ist verglichen mit gewöhnlichen transparenten Kunststoffen wie Epoxidharzen, PMMA (Polymethylmethacrylat, auch als Acrylglas bezeichnet), PMMI (Polymethacrylmethylimid) oder PC (Polycarbonate) oder dergleichen außerordentlich temperaturbeständig sowie resistent gegen Feuchtigkeit und UV-Strahlung, sodass es sich besonders gut als Material für langlebige Leuchtmittel und insbesondere LED-Leuchten eignet. Silikon weist eine hervorragende Lichttransmission auf, die auch über lange Einsatzzeiten erhalten bleibt, ohne dass sich eine von anderen Materialien bekannte alterungsbedingte Trübung bzw. Verfärbung einstellt. Aufgrund der oben genannten Eigenschaften können Silikonlinsen sehr nahe an den LED-Leuchtmitteln angeordnet werden, wodurch die Effizienz der Lichtausstrahlung verbessert wird. Darüber hinaus bietet Silikon herausragende Designfreiheit aufgrund hoher Elastizität und Zähigkeit, was nicht zuletzt für die Herstellung der doppelten Facettierung der vorliegenden Erfindung sowie anderer Mikrostrukturen besonders hilfreich ist.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung können die LED-Leuchtmittel zumindest zwei Gruppen bilden. Die LED-Leuchtmittel jeder Gruppe können jeweils zur Abstrahlung von Licht einer bestimmten Farbe und/oder Farbtemperatur ausgebildet sein. Beispielsweise können rote, grüne und blaue LEDs als Leuchtmittel in der üblichen Art und Weise als RGB-Quellen für farbiges Licht dienen. In einem anderen Beispiel können weiße LEDs unterschiedlicher Farbtemperatur kombiniert werden, z.B. kalt weißes Licht und warm weißes Licht. Prinzipiell ist es natürlich ebenso möglich unterschiedliche LEDs zur Mischung aus Rot, Grün, Blau und warmweiß oder ähnlich zu kombinieren.

Gemäß einer Weiterbildung können die LED-Leuchtmittel der unterschiedlichen Gruppen alternierend über eine Abstrahlfläche des LED-Moduls hinweg angeordnet sein. Beispielsweise können Tripel aus RGB-LEDs ein alternierendes Raster bilden, z.B. ein rechteckiges oder quadratisches Raster. Ebenso können in einem anderen Beispiel kaltweiße und warmweiße LEDs abwechselnd in einem Raster über die Abstrahlfläche verteilt sein.

Gemäß einer Weiterbildung kann das LED-Modul zur Abstrahlung von abstimmbarem Weiß, RGB, RGBA, RGBW und/oder AWB oder dergleichen ausgebildet sein. Unter abstimmbaren Weiß (englisch: "Tunable White") wird hierbei die variable Farbtemperatursteuerung der Leuchte innerhalb des weißen Lichts verstanden, d.h. zwischen warmweiß ab etwa 2000 K und kaltweiß bei bis zu etwa 6000 K. Abstimmbares Weiß stellt ein Beleuchtungskonzept dar, welches sich am Vorbild des Tageslichts orientiert, und welches anstrebt, für wechselnde Tageszeiten eine jeweils als angenehm empfundene Farbtemperatur weißen Lichts zu erzeugen. Eine derartige Variabilität kann beispielsweise durch die Kombination von LEDs mit unterschiedlicher Farbtemperatur erreicht werden, deren Beleuchtungsstärke von einer Steuerung jeweils separat in unterschiedlichen Regelkreisen dynamisch variiert wird. Dem Fachmann wird sich hierbei erschließen, dass alternativ oder zusätzlich andere Mischungsvarianten möglich sind, z.B. rote, grüne, blaue und weiße LEDs im Falle von RGBW. Ebenso können andere Farbformate zum Einsatz kommen wie RGBA (Rot, Grün, Blau und Alpha, d.h. Durchsichtigkeit), AWB (Amber, Weiß, Blau) usw.

Gemäß einer Weiterbildung können die LED-Leuchtmittel randseitig lichtundurchlässig ausgebildet sein. Beispielsweise können hierzu Barrieren aus einem geeigneten Material, z.B. TiO2, um den Chip des LED-Leuchtmittel geformt sein. Seitlich austretendes Licht kann dadurch reflektiert werden und somit die frontale Lichtauskopplung verbessert werden. Dies bedeutet, dass die LED-Leuchtmittel ausschließlich aus der beispielweise auf einer LED-Platine oben liegenden Lichtaustrittsfläche Licht abstrahlen. Einerseits wird die Lichtausbeute und Effizienz der LED-Leuchtmittel derart verbessert. Andererseits können ungewünschte Effekte durch Wechselwirkung nebeneinander angeordneter LEDs wie Cross-Light oder Cross-Talk vermieden werden. Letztendlich kann das Licht aufgrund dieser Vorteile stärker gebündelt und zielgerichteter ausgestrahlt werden.

Gemäß einer Weiterbildung können die LED-Leuchtmittel jeweils als CSP-LED oder ähnlich ausgebildet sein. CSP steht für "Chip Scale Package" (auf Deutsch etwa: "Gehäuse in der Größenordnung des Chips") und bezeichnet eine bestimmte LED-Technologie, bei der die LEDs in außerordentlich kompakter Bauweise mit hoher Leistungsstärke (große Leuchtdichte bzw. Lichtstärke) bei gleichzeitig stark gebündelter und gerichteter Abstrahlung herstellbar sind.

Gemäß einer Weiterbildung kann die Silikonlinse unmittelbar auf dem LED-Modul und/oder den LED-Leuchtmitteln des LED-Moduls aufsitzen. Die Anordnung aus LED-Leuchtmitteln und Silikonlinse kann somit in dieser Weiterbildung vorteilhafterweise außerordentlich kompakt ausgebildet werden.

Gemäß einer Weiterbildung kann die Lichteintrittsfläche der Silikonlinse sphärisch konkav und die Lichtaustrittsfläche der Silikonlinse sphärisch konvex ausgebildet sein. Insbesondere kann die Krümmung der Lichteintrittsfläche der Krümmung der Lichtaustrittsfläche entsprechen. Die Silikonlinse kann somit eine sphärisch gekrümmte Kuppel bilden, deren Inneres zwischen der Lichteintrittsfläche und der Lichtaustrittsfläche als Mischkammer für Licht unterschiedlicher Farbe und/oder Farbtemperatur dient.

Gemäß einer Weiterbildung kann die Leuchte eine Steuereinheit umfassen, die zur Steuerung der Lichtabstrahlung des LED-Moduls ausgebildet ist. Die Steuereinheit kann zur unabhängigen Ansteuerung der einzelnen LED-Leuchtmittel ausgebildet sein. In einem konkreten Beispiel können einzelne LEDs jeweils unabhängig voneinander von der Steuereinheit geregelt bzw. gesteuert werden, z.B. eine Vielzahl von Einzel-LEDs unterschiedlicher Farbe und/oder Farbtemperatur.

Alternativ oder zusätzlich kann die Steuereinheit zur unabhängigen Ansteuerung zumindest zweier Gruppen der LED-Leuchtmittel ausgebildet sein, wobei die LED-Leuchtmittel innerhalb jeder Gruppe gemeinsam gesteuert werden. Beispielsweise kann eine Vielzahl von Einzel-LEDs in zwei Gruppen unterteilt sein, wobei eine erste Gruppe warmweiße LEDs und eine zweite Gruppe kaltweiße LEDs enthält. Die LEDs einer Gruppe müssen hierzu nicht nebeneinander angeordnet sein. Vielmehr können die LEDs beispielsweise alternierend oder andersartig verteilt über eine Abstrahlfläche angeordnet sein.

Gemäß einer Weiterbildung kann jede Gruppe über einen zugehörigen Regelkreis von der Steuereinheit gesteuert werden. In dem obigen Beispiel würden somit die kaltweißen LEDs von einem ersten Regelkreis und die warmweißen LEDs von einem zweiten Regelkreis gesteuert werden.

Gemäß einer Weiterbildung kann das Leuchtensystem einen Systemkörper aufweisen. Die Leuchten können jeweils einzeln lösbar in den Systemkörper eingesetzt sein. Die Kombination mehrerer derartiger Leuchten in dem Leuchtensystem ermöglicht unterschiedlichste Beleuchtungsszenarien mit einem einheitlichen System umzusetzen. Die Leuchten fungieren hierbei gewissermaßen als Module bzw. "Insets", die in unterschiedlichen Ausführungen miteinander kombinierbar sind. Beispielsweise kann das Leuchtensystem als Downlight ausgebildet sein, wobei ein Modul zur Ausleuchtung eines Arbeitsplatzes optimiert sein kann, während andere Module eine warme Stimmung erzeugen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 eine schematische perspektivische Darstellung einer LED-Leuchte von schräg oben gemäß einer Ausführungsform der Erfindung;
Fig. 2 eine schematische Draufsicht auf die LED-Leuchte aus Fig. 1;
Fig. 3 eine schematische Explosionsansicht der LED-Leuchte aus Fig. 1;
Fig. 4 eine schematische Schnittansicht der LED-Leuchte aus Fig. 1 entlang der Linie A-A in Fig. 2 sowie eine vergrößerte Ansicht mit einer im Zentrum der LED-Leuchte angeordneten Silikonlinse;
Fig. 5 eine schematische Draufsicht auf eine Platine mit LED-Leuchtmitteln wie sie in der LED-Leuchte aus Fig. 1 verwendet wird;
Fig. 6 schematische Schnittansichten einer beispielhaften LED-Leuchte ohne Silikonlinse in unterschiedlichen Betriebszuständen;
Fig. 7 eine schematische Schnittansicht der Silikonlinse der LED-Leuchte aus Fig. 1 während des Betriebs;
Fig. 8 schematische Schnittansichten der LED-Leuchte aus Fig. 1 in unterschiedlichen Betriebszuständen;
Fig. 9 eine schematische Ansicht eines Regel- und Versorgungskreises für die LED-Leuchte aus Fig. 1; und
Fig. 10 eine schematische Draufsicht auf ein Leuchtensystem mit einer Vielzahl von LED-Leuchten entsprechend zu jener in Fig. 1.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### AUSFÜHRLICHE BESCHREIBUNG VON AUSFÜHRUNGSBEISPIELEN

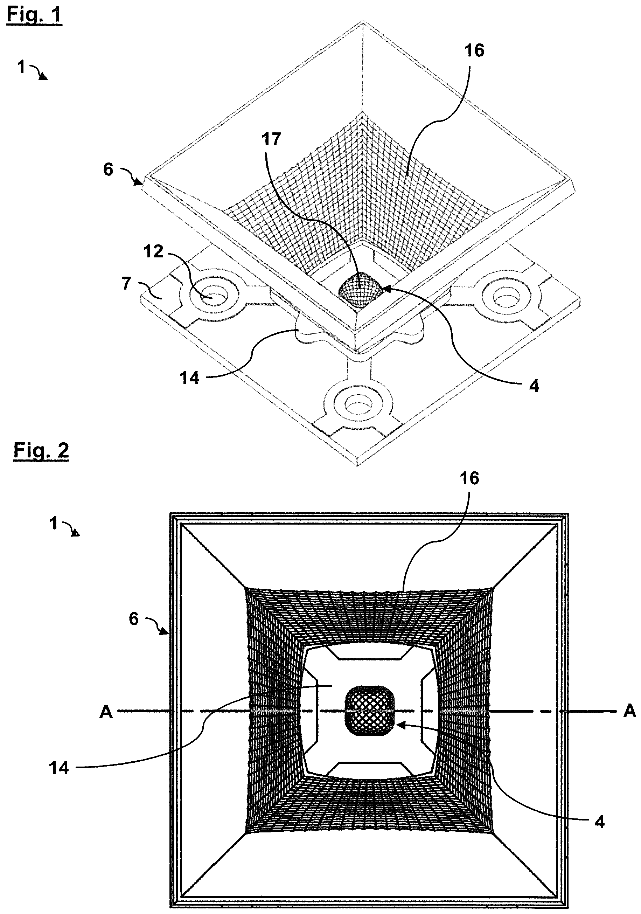

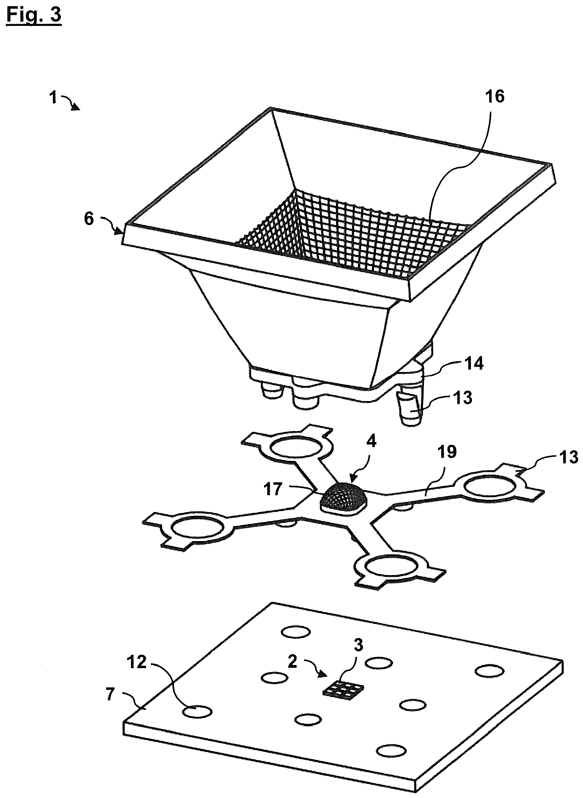

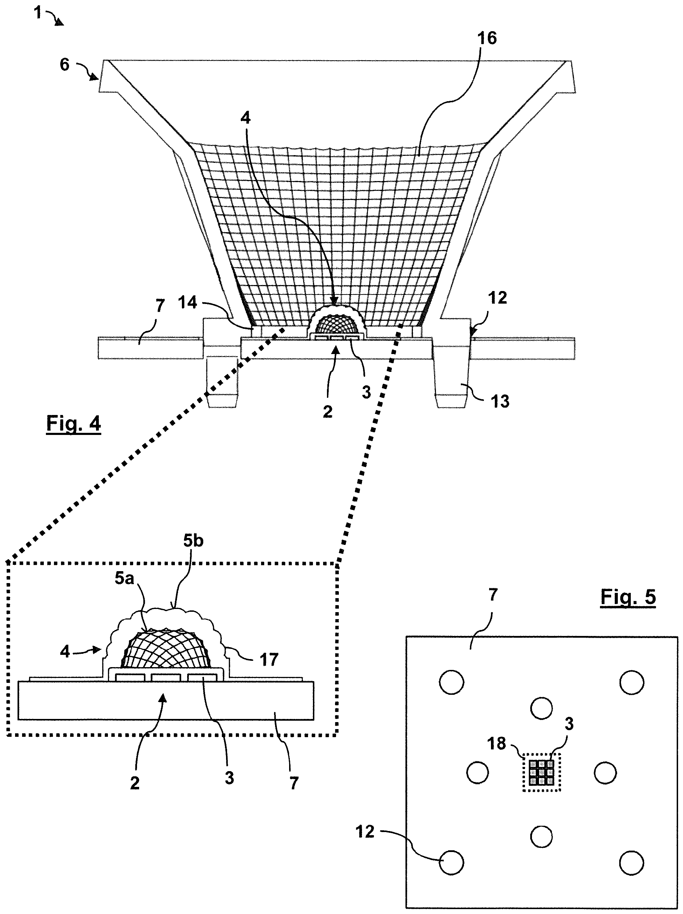

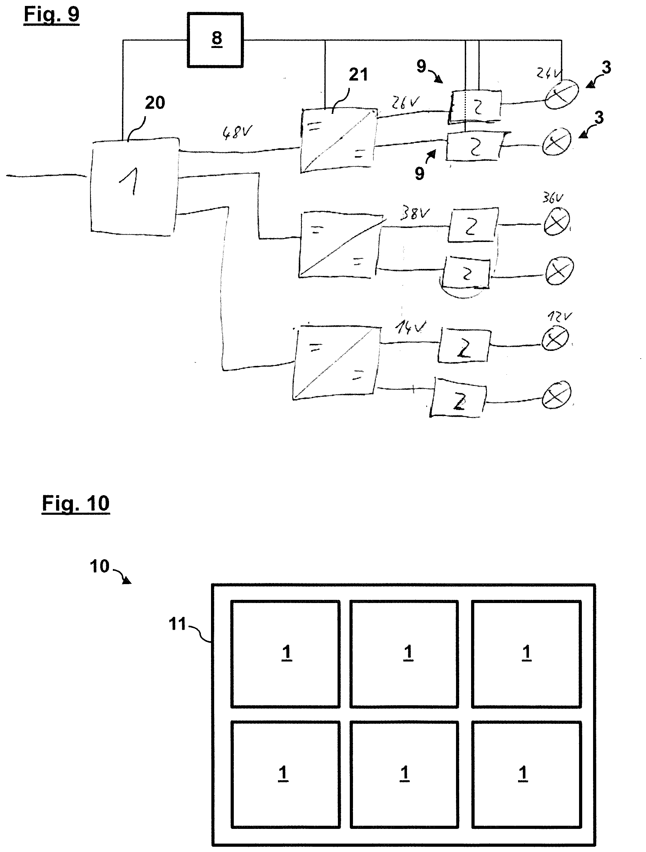

Figur 1 zeigt eine schematische perspektivische Darstellung einer Leuchte 1 von schräg oben gemäß einer Ausführungsform der Erfindung. Die Leuchte 1 ist weiterhin in Fig. 2 in einer Draufsicht, in Fig. 3 in einer Explosionsansicht und in Fig. 4 in einer Schnittansicht abgebildet. Die Leuchte 1 kann hierbei eine von mehreren Leuchten 1 in einem Leuchtensystem 10 sein, wie es in Fig. 10 schematisch angedeutet ist.

Das Leuchtensystem 10 in dem Beispiel aus Fig. 10 umfasst einen Leuchtenkörper 11, in den insgesamt sechs LED-Leuchten 1 in einer 2 x 3 Matrix einzeln eingesetzt sind. Der Leuchtenkörper 11 kann beispielsweise einstückig aus einem Metallmaterial, wie etwa Aluminium oder einer Aluminiumlegierung, gefertigt sein. Dabei kann der Leuchtenkörper 11 - wie schematisch in Fig. 10 dargestellt - eine im Wesentlichen rechteckige Grundfläche aufweisen, wobei die einzelnen Leuchten 1 eine etwa quadratische Form haben können. Die Leuchten 1 können hierbei einzeln in den Leuchtenkörper 11 eingesetzt und wieder entnommen werden, sodass in flexibler Weise unterschiedlichste Konfigurationen des Leuchtensystems 10 umsetzbar sind, indem je nach Anwendungsfall unterschiedlich ausgebildete Leuchten 1 verwendet werden, die somit gewissermaßen als Lichteinsätze oder Lichtmodule fungieren. Dabei kann die Leuchte 10 eine Vielzahl von Leuchtdioden ("Light Emitting Diodes", LEDs) als aktive Leuchtmittel aufweisen. Die Leuchte 1 kann daher auch als LED-Leuchte 1 bezeichnet werden. Die LEDs können beispielsweise mit einer Gleichspannung betriebene Hochvolt-LEDs sein, deren Betriebsspannung möglichst nahe an der effektiven Netzspannung geführt wird. Ebenso können die LEDs ebenso Niedervolt-LEDs sein. Niedervolt-LEDs sind ebenso wie Hochvolt-LEDs mit Gleichspannung betriebene LEDs, deren Betriebsspannung allerdings signifikant unterhalb der Netzspannung liegt und die deshalb eine separate Spannungsumsetzung benötigen. Niedervolt-LEDs haben jedoch meist einen etwas besseren Wirkungsgrad als Hochvolt-LEDs.

Das Leuchtensystem 10 kann zum Beispiel in eine beispielsweise abgehängte Decke eingebaut oder an einer Decke befestigt sein, wobei eine Anbringung an anderen Teilen eines Bauwerks, etwa im Wandbereich, ebenso möglich ist. Das Leuchtensystem 10 kann somit beispielsweise als Downlight oder Wallwasher oder dergleichen fungieren, wobei eine oder mehrere der LED-Leuchten 1 beispielsweise unterschiedliche Abstrahlcharakteristiken, Farben oder Lichteffekte erzeugen können. Die einzelnen LED-Leuchten 1 sind vor ihrer Herstellung und Lieferung vom Kunden, beispielsweise durch einen Lichtdesigner, frei konfigurierbar, beispielsweise um mehrere mittels LED-Leuchten 1 darzustellende Lichteffekte in der gewünschten Weise zu vereinen.

Das Leuchtensystem 10 eröffnet somit die Möglichkeit unterschiedlichste Beleuchtungskonzepte in flexibler Weise umzusetzen. Beispielsweise können gleichzeitig Wände aufgehellt, Licht für die Allgemeinbeleuchtung bereitgestellt und Highlights gesetzt werden, z.B. um einen Arbeitsplatz auszuleuchten oder bestimmte Einrichtungsgegenstände zur Geltung zu bringen. Dem Fachmann wird hierbei klar sein, dass auch andere Aufteilungen für den Leuchtenkörper 11 und die LED-Leuchten 1 des Leuchtensystems 10 möglich sind, beispielsweise andere Gehäuseformen, unterschiedliche Matrixanordnungen, mehrere Einzelspots in einer Reihe oder eine andere irreguläre Anordnung von Einzelspots. Der Systemkörper 11 kann in einen in den Figuren nicht explizit dargestellten Einbaurahmen eingesetzt werden. Der Einbaurahmen kann zum Einbau beispielsweise in eine Decke oder eine Wand an dessen umlaufender Außenseite mit Strukturen ausgestattet werden, die zum Beispiel den "randlosen" Einbau, etwa mittels Einspachteln, erleichtern.

Die beispielhafte Leuchte 1 gemäß Fig. 1 bis 4 umfasst ein LED-Modul 2 mit einer Vielzahl von LED-Leuchtmitteln 3, welches jeweils als Einzel-LEDs ausgebildet sind und in einer Abstrahlfläche 18 nebeneinander in einer quadratischen Grundform auf einer Platine 7 angeordnet sind, wie sie in Fig. 5 abgebildet ist. Jedes der LED-Leuchtmittel 3 kann in (nicht explizit dargestellten) Leuchtmittelaufnahmen oder Leuchtmittelsteckplätzen auf der Platine 7 angeordnet sein, die die verschiedenen LEDs bzw. Gruppen von LEDs trägt und eine entsprechende elektrische Energieversorgung der LED-Leuchtmittel 3 bereitstellt. Alternativ können die LED-Leuchtmittel 3 jedoch ebenso auf einem Halter oder einer Aufnahme des LED-Moduls 2 befestigt sein, der oder die dann wiederum auf der Platine 7 befestigt ist.

In Fig. 5 wird eine derartige Platine 7 beispielhaft gezeigt. Hier ist ersichtlich, dass die einzelnen LED-Leuchtmittel 3 in einem alternierenden Muster angeordnet sind, wobei in diesem konkreten Beispiel insgesamt zwei Gruppen aus Einzel-LEDs vorgesehen sind. Eine Gruppe umfasst hierbei LEDs, die in einem warmweißem Licht abstrahlen, z.B. bei etwa 2000 K bis 3000 K. Die andere Gruppe beinhaltet dagegen kaltweiß strahlende LEDs, z.B. 4500 K bis 6000 K. Die beiden Gruppen werden unabhängig voneinander geregelt, wodurch eine variable Farbtemperatursteuerung der LED-Leuchte 1 mit abstimmbarem Weiß (englisch: "Tunable White") ermöglicht wird (vgl. Fig. 9 weiter unten). Ebenso sind natürlich auch andere Spektralbereiche der weißen Lichtfarbe vorgesehen. Dem Fachmann wird sich unmittelbar erschließen, dass mehr als zwei Gruppen je nach Vorgaben umgesetzt werden können, wobei nicht nur weiße LEDs unterschiedlicher Farbtemperatur zum Einsatz kommen können, sondern darüber hinaus auch farbliche LEDs mit weißen LEDs kombiniert werden können, um damit RGB, RGBA, RGBW, AWB oder andere Farbschemata umzusetzen. Weiterhin können die LED-Leuchtmittel 3 anders als dargestellt auf einer oder mehreren Platinen 7 angeordnet sein, z.B. in unregelmäßigen Mustern, in mehreren räumlich voneinander getrennten Gruppen usw.

In der hier beschriebenen beispielhaften Ausführung sind die LED-Leuchtmittel 3 insbesondere als CSP-LEDs ausgebildet, welche randseitig lichtundurchlässig sind, um Cross-Light- oder Cross-Talk-Effekte, d.h. die gegenseitige Beeinflussung zwischen benachbarten Einzel-LEDs zu vermeiden und um eine stark gebündelte und gerichtete Ausstrahlung zu ermöglichen. Die CSP-Technologie (englisch: "Chip Scale Package") zeichnet sich durch herausragende Lichtausbeute und Lichtstärke aus. Aufgrund des stärker gebündelten Lichtstrahls können benachbarte LEDs oder Gruppen aus LEDs in unmittelbarer Nähe zueinander platziert werden. Insgesamt ergibt sich somit ein LED-Modul, welches besonders platzsparend ausgebildet werden kann. Außerdem sind Effizienzverluste gegenüber herkömmlichen LED-Technologien stark begrenzt.

Wieder bezugnehmend auf Fig. 1 bis 4 umfasst die LED-Leuchte 1 weiterhin eine Silikonlinse 4. Die Silikonlinse 4 ist unmittelbar auf dem LED-Modul 2 derart angeordnet, dass die LED-Leuchtmittel 3 von der Silikonlinse 4 abgedeckt werden und von diesen abgestrahltes Licht durch die Silikonlinse 4 möglichst verlustfrei hindurchtritt. Die Silikonlinse 4 ist weiterhin doppelt facettiert ausgebildet. Konkret weist die Silikonlinse 4 eine facettierte sphärisch konkave Lichteintrittsfläche 5a und eine facettierte sphärisch konvexe Lichtaustrittsfläche 5b zur Homogenisierung des von dem LED-Modul 2 ausgestrahlten Lichts auf. Die Silikonlinse 4 dient gewissermaßen als Mischkammer für das Licht der unterschiedlichen LED-Leuchtmittel 3, die wie bereits erwähnt in diesem Beispiel Licht mit zwei unterschiedlichen Farbtemperaturen abstrahlen. Das Licht wird von den LED-Leuchtmitteln 3 abgestrahlt, tritt anschließend über die Lichteintrittsfläche 5a in die Silikonlinse 4 ein und danach über die Lichtaustrittsfläche 5b wieder aus. Sowohl die Lichteintrittsfläche 5a als auch die Lichtaustrittsfläche 5b weisen eine Vielzahl von Linsenfacetten 17 auf, die im Zusammenspiel eine starke Vermischung der Lichtstrahlen der Einzel-LEDs bewirken. Im Ergebnis tritt hochgradig homogenes Licht einer einheitlichen Farbtemperatur bzw. Farbe aus der Silikonlinse 4 aus.

Weiterhin bezugnehmend auf Fig. 1 bis 4 umfasst die LED-Leuchte 1 darüber hinaus einen facettierten Reflektor 6, der um die Silikonlinse 4 herum auf der Platine 7 zur Reflexion des homogenisierten Lichts ausgebildet ist. In dem dargestellten Beispiel der Fig. 1 bis 4 ist der Reflektor 6 mit einer quadratischen Außenform illustriert, wobei einer Vielzahl von Reflektorfacetten 16 auf Innenflächen des Reflektors 6 verteilt angeordnet sind, die eine Art Kegel oder Trichter um die Lichtaustrittsfläche 5b der Silikonlinse 4 bilden. Prinzipiell sind natürlich auch andere Geometrien des Reflektors 6 vorgesehen. Der Reflektor 6 verleiht dem durch die LED-Leuchtmittel 3 abgestrahlten Licht eine jeweilige Abstrahlcharakteristik, beispielsweise die Abstrahlcharakteristik eines Downlights eines Wallwashers usw. Die Abstrahlcharakteristik des Leuchtensystems 10 kann somit je nach Anwendungsfall angepasst werden. Manche der LED-Leuchten 1 können somit die Abstrahlcharakteristik einer Einzelleuchte aufweisen, die bei einer Deckenmontage des Leuchtensystems 10 einen beispielsweise kreisrunden oder elliptischen Lichtkegel erzeugt. Andere LED-Leuchten 1 können die Abstrahlcharakteristik eines Wallwashers erzeugen, d.h. eine Hauptabstrahlrichtung aufweisen, die schräg zur Basis des Systemkörpers 11 liegt. Mit einer derartigen Wallwasher-Charakteristik kann beispielsweise eine Wand beleuchtet werden kann.

Zur Befestigung der einzelnen Bauteile kann der Fachmann je nach Anwendungsfall die ihm oder ihr bekannten Befestigungsmethoden verwenden. In dem beschriebenen Beispiel weist die Platine 7 (vgl. Fig. 5) eine Vielzahl von Befestigungspositionen 12 auf, an denen beispielsweise Befestigungsbohrungen vorgesehen sein können. In diese Befestigungsbohrungen können wiederum Befestigungsmittel 13 eingebracht werden, z.B. Raststifte, Druckhalter oder ähnlich. Im vorliegenden Beispiel ist die Silikonlinse 4 auf einem Linsensockel 19 aufgebracht, welcher wiederum mehrere Befestigungsarme aufweist. Der Reflektor 6 weist an einer unteren Seite einen Reflektorsockel 14 auf, an welchem wiederum eine Vielzahl von Raststiften angeordnet ist. Zur Montage kann zunächst die Silikonlinse 4 mit Linsensockel 19 auf der Platine angebracht werden. Anschließend kann der Reflektor 6 auf diese Anordnung aufgesetzt und in die Platine 7 eingesteckt werden.

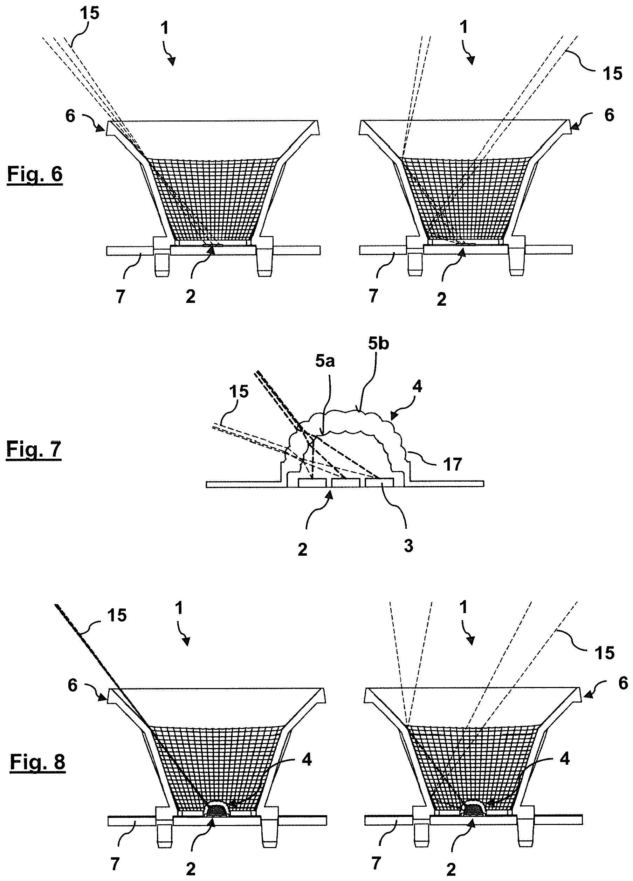

Im Folgenden werden mit Bezug auf Fig. 6 bis 8 die Vorteile der Verwendung einer doppelt facettierten Silikonlinse erläutert. Hierzu zeigt Fig. 6 schematische Schnittansichten einer beispielhaften LED-Leuchte ohne Silikonlinse in zwei unterschiedlichen Betriebszuständen. Links in Fig. 6 werden drei beispielhafte Lichtstrahlen 15 gezeigt, die von dem LED-Modul 2 ausgesendet werden. In diesem Fall handelt es sich um direktes Licht, welches ohne Reflexion an dem Reflektor 6 unmittelbar aus der LED-Leuchte 1 austritt. Rechts in Fig. 6 wird ein Betriebszustand gezeigt, bei welchem ausschließlich indirektes Licht erzeugt wird, d.h. die Lichtstrahlen 15 werden nach dem Aussenden von dem LED-Modul 2 an dem Reflektor 6 zunächst reflektiert, bevor sie aus der LED-Leuchte 1 austreten. Wie man beispielsweise links in Fig. 6 erkennen kann, treten die einzelnen Lichtstrahlen 15 relativ breit aufgefächert aus der LED-Leuchte 1. Dies führt im Betrieb dazu, dass das Licht unterschiedlicher LED-Leuchtmittel, z.B. kaltweiße LEDs auf der einen Seite und warmweiße LEDs auf der anderen Seite, nicht derart gemischt wird, dass eine einheitliche Farbtemperatur bzw. Farbe der LED-Leuchte 1 entsteht, was von einem Benutzer bzw. Betrachter als unangenehm empfunden werden kann, da ein Raum bzw. Raumbereiche oder Flächen nicht einheitlich angestrahlt bzw. beleuchtet werden.

Fig. 7 zeigt im Gegensatz hierzu eine Silikonlinse 4, wie sie in der LED-Leuchte 1 aus Fig. 1 zum Einsatz kommt. Wie bereits oben erläutert wurde, ist die Silikonlinse 4 mit einer facettierten Lichteintrittsfläche 5a und mit einer facettierten Lichtaustrittsfläche 5b zur Homogenisierung des von dem LED-Modul 2 ausgestrahlten Lichts ausgebildet. Die Linsenfacetten 17 beider Flächen 5a, 5b wirken hierbei wie kleine asphärische Linsen. Jede derartige Mikrolinse lenkt das Licht aller LED-Leuchtmittel 3 um und wirkt dadurch letztendlich als sehr kleine Lichtquelle auf der Oberfläche der Silikonlinse 4, d.h. einer kugelartigen Oberfläche. Jede dieser Lichtquellen wird gewissermaßen aus allen LED-Leuchtmitteln 3 gleichzeitig gebildet und emittiert deren Lichtfarben gemeinsam. Fig. 7 zeigt beispielhaft einige wenige ausgewählte Lichtstrahlen 15. Hierbei ist zu beachten, dass die auf Fig. 7 und den weiteren Figuren dargestellten LED-Leuchtmittel 3 in vereinfachender Weise als Punktquellen angenommen werden, auch wenn jedes LED-Leuchtmittel 3 in Realität von einer ausgedehnten Oberfläche Licht emittiert, d.h. jeder der gezeigten Lichtstrahlen 15 einen gewissen Flächenabschnitt, z.B. auf dem Reflektor 6, beleuchtet.

Fig. 8 zeigt entsprechend zu Fig. 6 zwei schematische Schnittansichten der LED-Leuchte 1 aus Fig. 1 in unterschiedlichen Betriebszuständen, einmal mit ausschließlich direkter Abstrahlung (links) und einmal mit ausschließlich indirekter Abstrahlung (rechts). Dem Fachmann wird hierbei klar sein, dass Betriebszustände mit einer Mischung aus direktem und indirektem Licht natürlich ebenso von den vorteilhaften Eigenschaften der Silikonlinse 4 profitieren. Im Vergleich zu Fig. 6 ist hierbei beispielsweise links deutlich sichtbar, wie viel stärker die Lichtstrahlen 15 aufgrund der Silikonlinse 4 gerichtet und gebündelt sind. Dies führt in der Anwendung dazu, dass das Licht unterschiedlich ausgebildeter LED-Leuchtmittel 3, z.B. von LEDs mit kaltweißen und warmweißem Licht, gemischt und homogenisiert wird, sodass in der Summe ein Licht mit einheitlicher Farbe bzw. Farbtemperatur abgestrahlt wird. Die Funktion der Reflektorfacetten 16 besteht hierbei darin, zunächst konzentrierte Strahlen unterschiedlicher Farbe zu verteilen und miteinander zu verschmelzen, um eine endgültige gleichmäßige Lichtverteilung zu erreichen.

Fig. 9 zeigt eine schematische Ansicht eines Regel- und Versorgungskreises für die LED-Leuchte 1 aus Fig. 1. Grundsätzlich wird die Versorgung mit elektrischer Energie über eine Steuereinheit 8 geregelt, die LED-Leuchtmittel 3 in unabhängigen Regelkreisen/Versorgungskreisen 9 ansteuert. Prinzipiell ist es hierbei möglich, dass die LED-Leuchtmittel 3 einzeln unabhängig voneinander gesteuert werden. Andererseits ist es auch vorgesehen, zwei oder mehrere Gruppen aus LED-Leuchtmitteln 3 gemeinsam zu schalten. Die LED-Leuchtmittel 3 können somit zur Erzeugung unterschiedlicher Lichteffekte flexibel, einzeln oder in verschiedenen Gruppen, schalt- und/oder steuerbar sein. Fig. 9 zeigt rein beispielhaft die paarweise Ansteuerung von LED-Leuchtmitteln 3 und/oder Gruppen aus LED-Leuchtmitteln 3. Lediglich beispielhaft werden hierbei unterschiedliche Konfigurationen mit unterschiedlichen Spannungsleveln schematisch angedeutet, die von einer Gleichspannungsquelle 20 bzw. einem Gleichrichter und entsprechend zwischengeschalteter Spannungswandler 21 (z.B. Abwärtswandler) bereitgestellt werden. Beispielsweise kann ein Eingangsgleichrichter dazu ausgelegt sein, eine Netzwechselspannung in eine Leuchtmittelversorgungsspannung zu richten. In einem konkreten Beispiel kann eine Wechselspannung, z.B. eine 230V oder 115V Netzwechelspannung, in eine Leuchtmittelversorgungsspannung von 48 Volt gerichtet werden, die dann weiter in kleinere geeignete Versorgungspannungen runtergeregelt wird, z.B. durch eine kaskadierte Folge geschalteter Spannungsteiler bzw. Spannungswandler. Der Gleichrichter 20 kann dabei einerseits eine Leuchtmittelversorgungsspannung für die LED-Leuchte 1 bzw. die in der LED-Leuchte 1 befindlichen LED-Leuchtmittel 3 bereitstellen, andererseits eine Versorgungsspannung für die Steuereinheit 8. Die Versorgungsspannung für die Steuereinheit 8 kann gegebenenfalls über einen zusätzlichen Gleichspannungswandler für die elektronischen Komponenten der Steuereinheit 8, wie etwa den Steuersignalgenerator in eine passende Versorgungsgleichspannung umgesetzt werden.

Das beschriebene Leuchtensystem 10 ist durch den modularen Leuchtmittelaufbau mit einzeln einsetzbaren LED-Leuchten 1 sehr flexibel und leicht skalierbar. Zudem wird eine leistungsstarke Möglichkeit zur Erzeugung unterschiedlichster Beleuchtungsszenarien mit unterschiedlichen Kombinationen aus Abstrahlcharakteristiken und Farbtemperaturen geschaffen. Durch die Kombination einer doppelt facettierten Silikonlinse 4 und einem facettierten Reflektor 6 wird eine hochgradig homogene und gerichtete Lichtaustrahlung bei gleichzeitiger minimaler Systemhöhe erreicht. Das Leuchtensystem 10 kann beispielsweise in geringer Einbautiefe ohne Spezialwerkzeuge in Wände oder Decken montiert werden, z.B. mit einem Schnapp- und/oder Rastsystem. Durch die Verwendung von CSP-LEDs wird der Effizienzverlust minimiert und ein kosteneffizientes und langlebiges System mit hoher Lichtausbeute und Lichtstärke geschaffen, das unterschiedliche Lichtfarben und Farbtemperaturen mit hoher Gleichmäßigkeit erzeugen kann.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### BEZUGSZEICHENLISTE

- 1: Leuchte
- 2: LED-Modul
- 3: LED-Leuchtmittel
- 4: Silikonlinse
- 5a: Lichteintrittsfläche
- 5b: Lichtaustrittsfläche
- 6: Reflektor
- 7: Platine
- 8: Steuereinheit
- 9: Regelkreis
- 10: Leuchtensystem
- 11: Systemkörper
- 12: Befestigungsposition
- 13: Befestigungsmittel
- 14: Reflektorsockel
- 15: Lichtstrahl
- 16: Reflektorfacetten
- 17: Linsenfacetten
- 18: Abstrahlfläche
- 19: Linsensockel
- 20: Gleichspannungsquelle
- 21: Spannungswandler/Spannungsteiler

## Patentansprüche

1. Leuchte (1), mit:
einem LED-Modul (2) mit einer Vielzahl von LED-Leuchtmitteln (3);
einer Silikonlinse (4), welche auf dem LED-Modul (2) angeordnet ist, wobei die Silikonlinse (4) mit einer facettierten Lichteintrittsfläche (5a) und mit einer facettierten Lichtaustrittsfläche (5b) zur Homogenisierung des von dem LED-Modul (2) ausgestrahlten Lichts ausgebildet ist; und
einem facettierten Reflektor (6), der um die Silikonlinse (4) herum zur Reflexion des homogenisierten Lichts ausgebildet ist;
wobei das LED-Modul (2) dazu ausgebildet ist, Licht mit variabler Farbe und/oder variabler Farbtemperatur abzustrahlen.

2. Leuchte (1) gemäß Anspruch 1, wobei die LED-Leuchtmittel (3) zumindest zwei Gruppen bilden, wobei die LED-Leuchtmittel (3) jeder Gruppe jeweils zur Abstrahlung von Licht einer bestimmten Farbe und/oder Farbtemperatur ausgebildet sind.

3. Leuchte (1) gemäß Anspruch 2, wobei die LED-Leuchtmittel (3) der unterschiedlichen Gruppen alternierend über eine Abstrahlfläche (18) des LED-Moduls (2) hinweg angeordnet sind.

4. Leuchte (1) gemäß einem der Ansprüche 1 bis 3, wobei das LED-Modul (2) zur Abstrahlung von abstimmbarem Weiß, RGB, RGBA, RGBW und/oder AWB ausgebildet ist.

5. Leuchte (1) gemäß einem der Ansprüche 1 bis 4, wobei die LED-Leuchtmittel (3) randseitig lichtundurchlässig ausgebildet sind.

6. Leuchte (1) gemäß einem der Ansprüche 1 bis 5, wobei die LED-Leuchtmittel (3) jeweils als CSP-LED ausgebildet sind.

7. Leuchte (1) gemäß einem der Ansprüche 1 bis 6, wobei die Silikonlinse (4) unmittelbar auf dem LED-Modul (2) und/oder den LED-Leuchtmitteln (3) des LED-Moduls (2) aufsitzt.

8. Leuchte (1) gemäß einem der Ansprüche 1 bis 7, wobei die Lichteintrittsfläche (5a) der Silikonlinse (4) sphärisch konkav und die Lichtaustrittsfläche (5b) der Silikonlinse (4) sphärisch konvex ausgebildet ist.

9. Leuchte (1) gemäß einem der Ansprüche 1 bis 8, weiterhin mit einer Steuereinheit (8), die zur Steuerung der Lichtabstrahlung des LED-Moduls (2) ausgebildet ist, wobei die Steuereinheit (8) zur unabhängigen Ansteuerung der einzelnen LED-Leuchtmittel (3) und/oder zur unabhängigen Ansteuerung zumindest zweier Gruppen der LED-Leuchtmittel (3) ausgebildet ist, wobei die LED-Leuchtmittel (3) innerhalb jeder Gruppe gemeinsam gesteuert werden.

10. Leuchte (1) gemäß Anspruch 9, wobei jede Gruppe über einen zugehörigen Regelkreis (9) von der Steuereinheit (8) gesteuert wird.

11. Leuchtensystem (10) mit einer Mehrzahl von Leuchten (1) gemäß einem der Ansprüche 1 bis 9.

12. Leuchtensystem (10) gemäß Anspruch 11, wobei das Leuchtensystem (10) einen Systemkörper (11) aufweist, in den die Leuchten (1) jeweils einzeln lösbar eingesetzt sind.
